(19) Europäisches Patentamt
European Patent Office
Office européen des brevets

(11) **EP 4 297 133 A1**

(12) **EUROPEAN PATENT APPLICATION**
published in accordance with Art. 153(4) EPC

(43) Date of publication:
**27.12.2023 Bulletin 2023/52**

(21) Application number: 22756305.3

(22) Date of filing: **18.02.2022**

(51) International Patent Classification (IPC):
*H01M 4/86* (2006.01)        *H01M 4/90* (2006.01)
*H01M 4/92* (2006.01)        *H01M 8/10* (2016.01)
*H01M 8/1004* (2016.01)        *B01J 23/42* (2006.01)
*B01J 27/24* (2006.01)

(52) Cooperative Patent Classification (CPC):
**B01J 23/42; B01J 27/24; H01M 4/86; H01M 4/90;
H01M 4/92; H01M 8/10; H01M 8/1004**

(86) International application number:
**PCT/JP2022/006743**

(87) International publication number:
**WO 2022/176988 (25.08.2022 Gazette 2022/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.02.2021 JP 2021024333**

(71) Applicant: **TOPPAN INC.
Tokyo 110-0016 (JP)**

(72) Inventors:
• **SUZUKI, Yutaka**
  **Tokyo 110-0016 (JP)**
• **MORIOKA, Hiroyuki**
  **Tokyo 110-0016 (JP)**
• **OZAWA, Madoka**
  **Tokyo 110-0016 (JP)**

(74) Representative: **Hoffmann Eitle
Patent- und Rechtsanwälte PartmbB
Arabellastraße 30
81925 München (DE)**

(54) **ELECTRODE CATALYST LAYER, MEMBRANE ELECTRODE ASSEMBLY, AND SOLID POLYMER-TYPE FUEL CELL**

(57)     An electrode catalyst layer has a first surface configured to be in contact with a polymer electrolyte membrane in a membrane electrode assembly, and a second surface facing away from the first surface. The electrode catalyst layer includes a first portion having a layer shape including the first surface, and a second portion having a layer shape including the second surface, the second portion being laminated on the first portion. The electrode catalyst layer contains a first catalyst containing platinum and a second catalyst containing transition metal oxide. The first catalyst has catalytic activity higher than that of the second catalyst. A density of the first catalyst in the electrode catalyst layer is highest in a region including the first surface in the first portion. A maximum value of the density of the first catalyst in the second portion is smaller than a minimum value of the density of the first catalyst in the first portion.

FIG.2

**Description**

[Technical Field]

The present disclosure relates to electrode catalyst layers, membrane electrode assemblies and polymer electrolyte fuel cells.

[Background Art]

Polymer electrolyte fuel cells (PEFCs) are provided with a polymer electrolyte membrane, a fuel electrode (anode) and an air electrode (cathode). In the polymer electrolyte fuel cell, the polymer electrolyte membrane is sandwiched between the anode and the cathode. The polymer electrolyte fuel cell generates electric power when a fuel gas containing hydrogen is supplied to the anode and an oxidant gas containing oxygen is supplied to the cathode. Electric power from the polymer electrolyte fuel cell is generated by electrochemical reactions described below.

$$H_2 \rightarrow 2H^+ + 2e^- \text{ ...} \qquad \text{Formula (1)}$$

$$1/2\ O_2 + 2H^+ + 2e^- \rightarrow H_2O \text{ ...} \qquad \text{Formula (2)}$$

The anode and the cathode each have a structure in which a gas diffusion layer is laminated on an electrode catalyst layer. The anode electrode catalyst layer generates protons and electrons from the fuel gas supplied to the electrode catalyst layer (the above formula (1)). The protons migrate to the cathode through a polyelectrolyte contained in the anode electrode catalyst layer and the polymer electrolyte membrane. The electrons migrate to the cathode through an external circuit. In the cathode electrode catalyst layer, the protons, the electrons and the oxidant gas externally supplied react with each other to generate water (the above formula (2)).

Catalysts contained in the anode electrode catalyst layer and catalysts contained in the cathode electrode catalyst layer promote redox reactions represented by formula (1) and formula (2). When the electrode catalyst layer contains a catalyst having high catalytic activity for redox reactions, the membrane electrode assembly exhibits high power generation performance. For example, a catalyst containing platinum is used as a catalyst having high catalytic activity (see e.g., PTL 1). On the other hand, there have been proposed catalysts using a non-noble metal element rather than a noble metal element and catalysts using both a noble metal element and a non-noble metal element (see e.g., PTL 2).

[Citation List]

[Patent Literature]

PTL 1: JP 2016-219179 A
PTL 2: JP 2008-270176 A

[Summary of Invention]

[Technical Problem]

A catalyst containing platinum is expensive since it contains platinum which is rare. Therefore, there is a demand for membrane electrode assemblies with a reduced platinum content. On the other hand, a catalyst using both a noble metal element and a non-noble metal element can reduce the cost required for producing the catalyst due to the reduced content of the noble metal element in the catalyst. However, there is room for further study on the influence of the structure of the electrode catalyst layer containing both a catalyst containing a noble metal, especially platinum, and a non-platinum catalyst containing no platinum, on the cell performance of the polymer electrolyte fuel cell including the membrane electrode assembly having the electrode catalyst layer.

An object of the present disclosure is to provide an electrode catalyst layer, a membrane electrode assembly and a polymer electrolyte fuel cell with improved power generation performance.

[Solution to Problem]

In order to achieve the above object, an electrode catalyst layer has a first surface configured to be in contact with a polymer electrolyte membrane in a membrane electrode assembly, and a second surface facing away from the first surface. The electrode catalyst layer includes a first portion having a layer shape including the first surface, and a second portion having a layer shape including the second surface, the second portion being laminated on the first portion. The electrode catalyst layer contains a first catalyst containing platinum and a second catalyst containing transition metal oxide. The first catalyst has catalytic activity higher than that of the second catalyst. A density of the first catalyst in the electrode catalyst layer is highest in a region including the first surface in the first portion. A maximum value of the density of the first catalyst in the second portion is smaller than a minimum value of the density of the first catalyst in the first portion.

In order to achieve the above object, a membrane electrode assembly includes the above electrode catalyst layer, and a polymer electrolyte membrane. The first surface of the electrode catalyst layer is bonded to the polymer electrolyte membrane.

In order to achieve the above object, a polymer electrolyte fuel cell includes the membrane electrode assembly.

According to the electrode catalyst layer, the membrane electrode assembly and the polymer electrolyte fuel cell described above, redox reactions in the electrode catalyst layer are more likely to occur compared with the case where the first catalyst is distributed in regions further from the polymer electrolyte membrane since the first catalyst having high catalytic activity is densely distributed in regions close to the polymer electrolyte membrane. Therefore, it is possible to enhance the cell performance of the polymer electrolyte fuel cell including the membrane electrode assembly having the electrode catalyst layer.

In the above electrode catalyst layer, a density of the second catalyst in the electrode catalyst layer may be highest in a region including the second surface in the second portion, and a maximum value of the density of the second catalyst in the first portion may be smaller than a minimum value of the density of the second catalyst in the second portion.

According to the above electrode catalyst layer, the first catalyst having high catalytic activity can be densely distributed in the vicinity of the polymer electrolyte membrane compared with the case where the second catalyst is distributed in regions close to the polymer electrolyte membrane since the second catalyst having low catalytic activity is densely distributed in regions further from the polymer electrolyte membrane. Therefore, it is possible to enhance the cell performance of the polymer electrolyte fuel cell including the membrane electrode assembly having the electrode catalyst layer.

In the above electrode catalyst layer, the first portion may be a portion that contains the first catalyst but does not contain the second catalyst, the second portion may be a portion that contains the second catalyst but does not contain the first catalyst, the first portion may have a layer shape including the first surface, and the second portion may have a layer shape including the second surface, the second portion being laminated on the first portion.

According to the above electrode catalyst layer, the first portion containing the first catalyst and the second portion containing the second catalyst can be separately formed. Therefore, in formation of the electrode catalyst layer using a catalyst layer slurry, it is possible to prepare catalyst layer slurries suitable for each of the first catalyst and the second catalyst.

In the above electrode catalyst layer, a transition metal in the transition metal oxide may be at least one selected from the group consisting of titanium, tantalum, niobium, iron and zirconium. According to the electrode catalyst layer, a catalyst having catalytic activity for redox reactions can be obtained.

In the above electrode catalyst layer, the second catalyst may have a fibrous shape. According to the electrode catalyst layer, the second catalyst having catalytic activity can increase the mechanical strength of the electrode catalyst layer and thus suppress occurrence of cracking in the electrode catalyst layer.

In order to achieve the above object, an electrode catalyst layer has a first surface configured to be in contact with a polymer electrolyte membrane in a membrane electrode assembly, and a second surface facing away from the first surface. The electrode catalyst layer includes a first portion having a layer shape including the first surface, and a second portion having a layer shape including the second surface, the second portion being laminated on the first portion. The electrode catalyst layer contains a first catalyst containing platinum and a second catalyst containing transition metal oxide. The first catalyst has catalytic activity higher than that of the second catalyst. A density of the first catalyst in the electrode catalyst layer is highest in a region including the second surface in the second portion, and a maximum value of the density of the first catalyst in the first portion is smaller than a minimum value of the density of the first catalyst in the second portion.

According to the above electrode catalyst layer, it is possible to enhance the cell performance of the polymer electrolyte fuel cell including the membrane electrode assembly having the electrode catalyst layer due to the density of the first catalyst having a gradient in the thickness direction of the electrode catalyst layer.

[Advantageous Effects of Invention]

According to the present disclosure, the cell performance can be improved.

[Brief Description of Drawings]

Fig. 1 is a cross-sectional view schematically illustrating a structure of a membrane electrode assembly of an embodiment.
Fig. 2 is a schematic diagram schematically illustrating a structure of an electrode catalyst layer provided in the membrane electrode assembly illustrated in Fig. 1.
Fig. 3 is an exploded perspective view illustrating a structure of a polymer electrolyte fuel cell having the membrane electrode assembly illustrated in Fig. 1.

[Description of Embodiments]

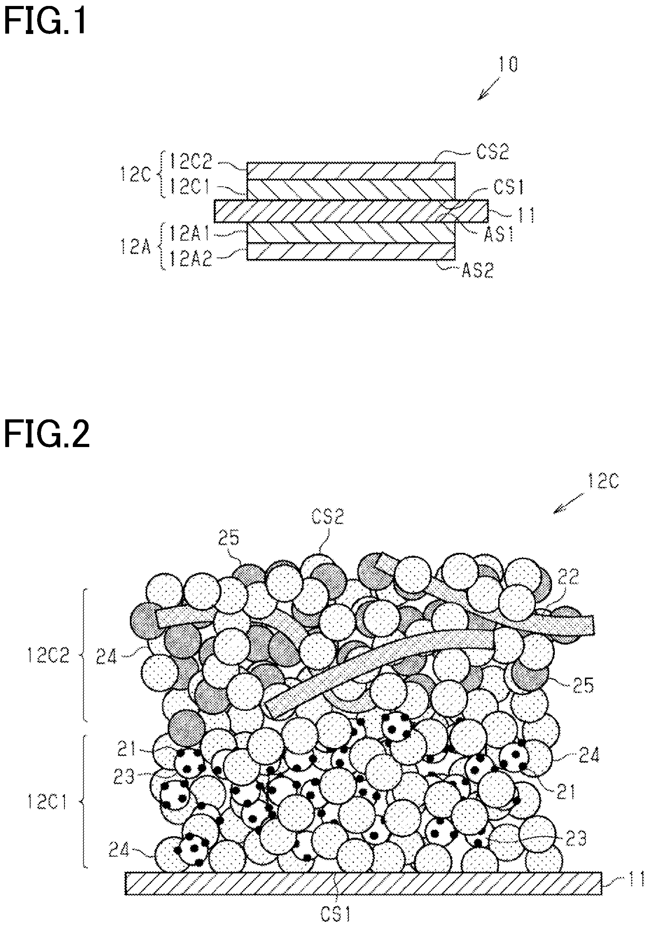

With reference to Figs. 1 to 3, an embodiment of an electrode catalyst layer, a membrane electrode assembly and a polymer electrolyte fuel cell will be described.

[Membrane Electrode Assembly]

With reference to Fig. 1, a membrane electrode assembly will be described.
As shown in Fig. 1, a membrane electrode assembly 10 includes a polymer electrolyte membrane 11, a cathode electrode catalyst layer 12C and an anode electrode catalyst layer 12A. The polymer electrolyte membrane 11 is formed of solid polymers. The cathode electrode catalyst layer 12C has a first surface CS1 and a second surface CS2 facing away from the first surface CS1. The first surface CS1 is a surface configured to be bonded to the polymer electrolyte membrane 11 in the membrane electrode assembly 10. The anode electrode catalyst layer 12A has a first surface AS 1 and a second surface AS2 facing away from the first surface AS 1. The first surface AS 1 is a surface configured to be bonded to the polymer electrolyte membrane 11 in the membrane electrode assembly 10.
The cathode electrode catalyst layer 12C is composed of a first portion 12C1 and a second portion 12C2. The first portion 12C1 has a layer shape including the first surface CS1. The second portion 12C2 has a layer shape including the second surface CS2 and is laminated on the first portion 12C1. The anode electrode catalyst layer 12A is composed of a first portion 12A1 and a second portion 12A2. The first portion 12A1 has a layer shape including the first surface AS1. The second portion 12A2 has a layer shape including the second surface AS2 and is laminated on the first portion 12A1.
In the present embodiment, both the cathode electrode catalyst layer 12C and the anode electrode catalyst layer 12A are electrode catalyst layers described below with reference to Fig. 2. However, either the cathode electrode catalyst layer 12C or the anode electrode catalyst layer 12A may be an electrode catalyst layer described below with reference to Fig. 2.
The polymer electrolyte membrane 11 may be formed of, for example, a polymer material having proton conductivity. The polymer material having proton conductivity may be, for example, a fluororesin or a hydrocarbon-based resin. Examples of the fluororesin include Nafion (manufactured by DuPont, registered trademark), Flemion (manufactured by Asahi Glass Co., Ltd, registered trademark), and Gore-Select (manufactured by Gore, registered trademark). Examples of the hydrocarbon-based resin include engineering plastics and resins obtained by introducing a sulfonate group into engineering plastics.

[Electrode Catalyst Layer]

With reference to Fig. 2, the configuration of the electrode catalyst layer will be described.
Fig. 2 schematically illustrates the cathode electrode catalyst layer 12C. The anode electrode catalyst layer 12A is bonded to a surface of the polymer electrolyte membrane 11 opposite to that to which the cathode electrode catalyst layer 12C is bonded, and has the same structure as that of the cathode electrode catalyst layer 12C. Therefore, the following description will be given of a structure of the cathode electrode catalyst layer 12C, and a detailed description of the anode electrode catalyst layer 12A will be omitted.
As shown in Fig. 2, the cathode electrode catalyst layer 12C contains a platinum catalyst 21 and an oxide catalyst 22. The platinum catalyst 21 contains platinum, and has catalytic activity higher than that of the oxide catalyst 22. The oxide catalyst 22 is formed of a transition metal oxide. The platinum catalyst 21 is an example of a first catalyst.

The oxide catalyst 22 is an example of a second catalyst.

In the cathode electrode catalyst layer 12C of the present embodiment, the first portion 12C1 contains the platinum catalyst 21 but does not contain the oxide catalyst 22. The second portion 12C2 contains the oxide catalyst 22 but does not contain the platinum catalyst 21. Thus, the density of the platinum catalyst 21 in the cathode electrode catalyst layer 12C is highest in a region including the first surface CS1. The density of the platinum catalyst 21 is substantially uniform throughout the first portion 12C1. Further, the density of the oxide catalyst 22 in the cathode electrode catalyst layer 12C is highest in a region including the second surface CS2. The density of the oxide catalyst 22 is substantially uniform throughout the second portion 12C2.

In the cathode electrode catalyst layer 12C, since the platinum catalyst 21 having high catalytic activity is densely distributed in regions close to the polymer electrolyte membrane 11, redox reactions in the electrode catalyst layer are more likely to occur compared with the case where the platinum catalyst 21 is distributed in regions further from the polymer electrolyte membrane 11. Therefore, it is possible to enhance the cell performance of the polymer electrolyte fuel cell including the membrane electrode assembly 10 having the electrode catalyst layer.

In the cathode electrode catalyst layer 12C, since the oxide catalyst 22 having low catalytic activity is densely distributed in regions further from the polymer electrolyte membrane 11, the platinum catalyst 21 having high catalytic activity can be densely distributed in the vicinity of the polymer electrolyte membrane 11 compared with the case where the oxide catalyst 22 is distributed in regions close to the polymer electrolyte membrane 11. Therefore, it is possible to enhance the cell performance of the polymer electrolyte fuel cell including the membrane electrode assembly 10 having the electrode catalyst layer.

The first portion 12C1 containing the platinum catalyst 21 and the second portion 12C2 containing the oxide catalyst 22 can be separately formed. Therefore, in formation of the electrode catalyst layer using a catalyst layer slurry, it is possible to prepare catalyst layer slurries suitable for each of the platinum catalyst 21 and the oxide catalyst 22.

In the present embodiment, the oxide catalyst 22 may have a fibrous shape. In this case, the oxide catalyst 22 having catalytic activity can increase the mechanical strength of the electrode catalyst layer and thus suppress occurrence of cracking in the electrode catalyst layer. In the following description, the details of the oxide catalyst 22 will be described on the assumption that the oxide catalyst 22 has a fibrous shape.

The oxide catalyst 22 preferably has a length of 500 nm or more and 10 $\mu$m or less. When the length of the oxide catalyst 22 is 500 nm or more, the oxide catalysts are entangled, reducing occurrence of cracking in the electrode catalyst layer. This improves the durability of the polymer electrolyte fuel cell including the membrane electrode assembly 10. When the length of the oxide catalyst 22 is 10 $\mu$m or less, the catalyst layer slurry can be produced and the electrode catalyst layer using the catalyst layer slurry can be formed.

The oxide catalyst 22 has an aspect ratio, which is a ratio (L/D) of a length (L) to a diameter (D). The aspect ratio is preferably 10 or more and 1,000 or less. When the aspect ratio is 10 or more, the density of the electrode catalyst layer is prevented from becoming excessively small, preventing a decrease in power generation performance in a high current density region. The density of the electrode catalyst layer is a ratio of the mass of a nonvolatile component to the volume of the electrode catalyst layer. When the aspect ratio is 1,000 or less, the catalyst layer slurry can be produced and the electrode catalyst layer using the catalyst layer slurry can be formed.

The oxide catalyst 22 preferably has a volume resistance of 10 $\Omega$cm or less. When the volume resistance is 10 $\Omega$cm or less, the electron conduction in the electrode catalyst layer is prevented from decreasing, whereby the ohmic resistance is prevented from increasing. As a result, the power generation performance of the polymer electrolyte fuel cell including the membrane electrode assembly 10 is prevented from decreasing.

In the transition metal oxide constituting the oxide catalyst 22, the transition metal is at least one selected from the group consisting of titanium (Ti), tantalum (Ta), niobium (Ni), iron (Fe) and zirconium (Zr). Accordingly, the oxide catalyst 22 having catalytic activity for redox reactions can be obtained. The transition metal is preferably Ti or Zr. By selecting one of these transition metals, the oxide catalyst 22 exhibits higher catalytic activity compared with the case where it contains other transition metals.

The oxide catalyst 22 contains oxygen (O) atoms, nitrogen (N) atoms and transition metal atoms (M). The oxide catalyst 22 is represented by the chemical formula $M_wO_xN_y$. In the chemical formula, w and x each satisfy the following.

$$w = 1\text{-}i \ (i \geq 0)$$

$$x = 2\text{-}(y+j) \ (j \geq 0)$$

When the transition metal M is Ti or Zr, the oxide catalyst 22 may contain carbon (C) atoms. In this case, the oxide catalyst 22 is represented by the chemical formula $M_wO_xN_yC_v$. The carbon atoms may be doped in the oxide catalyst 22, or may be deposited on the oxide catalyst 22 in a chemical state such as graphite.

When the transition metal M is Ti or Zr, the oxide catalyst 22 is preferably doped with phosphorus (P) atoms. In this case, the oxide catalyst 22 is represented by the chemical formula $M_wO_xN_yP_z$. In the chemical formula, w and x each satisfy the following.

$$w = 1-(z+i) \; (i \geq 0)$$

$$x = 2-(y+j) \; (j \geq 0)$$

The P doped in the oxide catalyst 22 is present as pentavalent positive ions in the oxide catalyst 22. In the oxide catalyst 22 containing $P^{5+}$, at least one of the doped $P^{5+}$ itself and titanium or zirconium deficiencies formed by doping of $P^{5+}$ to compensate for the charge imbalance may form a new active site for oxygen reduction reaction. This enhances the catalytic activity of the oxide catalyst 22.

The oxide catalyst 22 preferably has a ratio (NP/NM) of the number of phosphorus atoms (NP) to the number of M atoms (NM) of 0.1 or more and 2.0 or less. That is, $M_wO_xN_yP_z$ preferably satisfies the following formula.

$$0.1 \leq z \leq 2.0$$

This enhances the catalytic activity of the oxide catalyst 22 for redox reactions.

When the oxide catalyst 22 contains Ti, a ratio ($N_N/N_{Ti}$) of the number of nitrogen atoms ($N_N$) to the number of Ti atoms ($N_{Ti}$) is preferably 1.0 or more and 1.5 or less. That is, $Ti_wO_xN_yP_z$ preferably satisfies the following formula.

$$1.0 \leq y \leq 1.5$$

This enhances the catalytic activity of the oxide catalyst 22 for redox reactions.

The oxide catalyst 22 may be formed of a core portion and a surface layer portion covering the core portion. When the transition metal is Ti, the core portion contains a titanium nitride (TiN) lattice. The surface layer portion contains a titanium dioxide ($TiO_2$) lattice. Both the core portion and the surface layer portion contain $P^{5+}$. Accordingly, the catalytic activity of the oxide catalyst 22 for redox reactions can be increased.

On the other hand, the platinum catalyst 21 has a particulate shape. The platinum catalyst 21 may be formed of an alloy containing platinum, an oxide of platinum, a complex oxide containing platinum, or the like. The alloy containing platinum may contain, for example, platinum group elements other than platinum. The platinum group elements include palladium (Pd), ruthenium (Ru), iridium (Ir), rhodium (Rh) and osmium (Os). Examples of the alloy containing platinum include those containing iron (Fe), lead (Pt), copper (Cu), chromium (Cr), cobalt (Co), nickel (Ni), manganese (Mn), vanadium (V), molybdenum (Mo), gallium (Ga) and aluminum (Al). The catalyst formed of the alloy containing platinum is preferred in that the metal contained in the platinum catalyst 21 is less likely to elute in redox reactions, and an overvoltage in the redox reactions is low.

The platinum catalyst 21 preferably has a particle size in the range of 0.5 nm or more and 20 nm or less, and more preferably in the range of 1 nm or more and 5 nm or less. When the particle size of the platinum catalyst 21 is 0.5 nm or more, the stability of the platinum catalyst 21 is less likely to decrease. When the particle size of the platinum catalyst 21 is 20 nm or less, the activity of the platinum catalyst 21 is less likely to decrease.

The cathode electrode catalyst layer 12C contains a carrier 23, a polyelectrolyte 24 and a conductive material 25 in addition to the platinum catalyst 21 and the oxide catalyst 22. The carrier 23 carries the platinum catalyst 21. The carrier 23 may be, for example, carbon particles, carbon fibers, metal oxide, or the like. The metal oxide may be, for example, tin oxide. The tin oxide may be doped with tungsten or niobium. This enhances the conductivity of the carrier 23. As the carrier 23, carbon particles are particularly preferred. By selecting the carbon particles as the carrier 23, the surface area of the carrier 23 can be increased compared with the case where other carriers are selected, so that the platinum catalyst 21 can be carried at a high density. This improves the catalytic activity per carrier 23. The carrier 23 may be a carrier other than the carbon particles, carbon fibers and metal oxides described above. In this case, the carrier 23 may be fine particles having conductivity and not affected by the platinum catalyst 21.

The carrier 23 preferably has an average particle size in the range of 10 nm or more and 1000 nm or less, and more preferably in the range of 10 nm or more and 100 nm or less. When the particle size of the carrier 23 is 10 nm or more, the carrier 23 is prevented from becoming too small, whereby electron conductive paths are more likely to be formed. When the particle size of the carrier 23 is 1000 nm or less, the carrier 23 is prevented from becoming too large, whereby the electrode catalyst layer is prevented from becoming too thick. Accordingly, the resistance of the electrode catalyst layer is prevented from increasing, and as a result, the output performance of the fuel cell including the electrode catalyst layer is prevented from decreasing.

The polyelectrolyte 24 may be, for example, a polymer material having proton conductivity. The polymer material having proton conductivity may be, for example, a fluororesin or a hydrocarbon-based resin. Examples of the fluororesin include Nafion (manufactured by DuPont, registered trademark). Examples of the hydrocarbon-based resin include engineering plastics and resins obtained by introducing a sulfonate group into a copolymer of engineering plastics.

The polyelectrolyte 24 preferably has a dry mass value (equivalent weight: EW) per mole of proton-donating group in the range of 400 or more and 1,200 or less, and more preferably in the range of 600 or more and 1,000 or less. When the equivalent weight EW is 400 or more, decrease in power generation performance due to flooding is prevented. When the equivalent weight EW is 1,200 or less, the proton conductivity is prevented from decreasing, and thus the power generation performance of the fuel cell including the electrode catalyst layer is prevented from decreasing.

The cathode electrode catalyst layer 12C preferably has a mass ratio of the polyelectrolyte 24 to the oxide catalyst 22 (mass of polyelectrolyte (I)/mass of oxide catalyst (Ox): mass ratio I/Ox) in the range of 0.3 or more and 4.0 or less, and more preferably in the range of 0.4 or more and 2.5 or less. When the mass ratio I/Ox is 0.3 or more, the diffusion rate of protons is prevented from decreasing, and thus the power generation performance is prevented from decreasing. When the mass ratio I/Ox is 4.0 or less, flooding is prevented from occurring, and thus the power generation performance is prevented from decreasing. The polyelectrolyte 24 repeats swelling and contraction due to a difference between dry and wet during power generation. Therefore, when the mass ratio I/Ox is 4.0 or less, the durability of the cathode electrode catalyst layer 12C is prevented from decreasing.

The cathode electrode catalyst layer 12C preferably has a mass ratio of the polyelectrolyte 24 to the carrier 23 (mass of polyelectrolyte (I)/mass of carrier (S): mass ratio I/S) in the range of 0.4 or more and 1.8 or less, and more preferably in the range of 0.5 or more and 1.3 or less. When the mass ratio I/S is 0.4 or more, the diffusion rate of protons is prevented from decreasing, and thus the power generation performance is prevented from decreasing. When the mass ratio I/S is 1.8 or less, flooding is prevented from occurring, and thus the power generation performance is prevented from decreasing and the durability of the cathode electrode catalyst layer 12C is prevented from decreasing.

The anode electrode catalyst layer 12A preferably has a mass ratio of the polyelectrolyte 24 to the carrier 23 (mass of polyelectrolyte (I)/mass of carrier (S): mass ratio I/S) in the range of 0.5 or more and 1.5 or less, and more preferably in the range of 0.7 or more and 1.2 or less. When the mass ratio I/S is 0.5 or more, the diffusion rate of protons is prevented from decreasing, and as a result, the power generation performance is prevented from decreasing. When the mass ratio I/S is 1.5 or less, flooding is prevented from occurring, and thus the power generation performance is prevented from decreasing and the durability of the anode electrode catalyst layer 12A is prevented from decreasing.

The conductive material 25 may be, for example, carbon particles, carbon black, graphite, black lead, activated carbon, carbon fibers, carbon nanotubes, fullerenes, or the like. As the conductive material 25, carbon fibers are preferred. The conductive material 25 may be a material having conductivity and not affected by the platinum catalyst 21 and the oxide catalyst 22. Further, when the conductive material 25 has a fibrous shape, cracking is not likely to occur in the electrode catalyst layer, enhancing the durability of the electrode catalyst layer.

When the conductive material 25 has a fibrous shape, the conductive material 25 preferably has a fiber diameter in the range of 0.5 nm or more and 500 nm or less, and more preferably within the range of 10 nm or more and 300 nm or less. When the fiber diameter is within the above range, the catalysts can be brought close to each other in the electrode catalyst layer, whereby the output of the fuel cell including the electrode catalyst layer can be increased.

When the conductive material 25 has a fibrous shape, the conductive material 25 preferably has a fiber length in the range of 1 μm or more and 200 μm or less, and more preferably within the range of 1 μm or more and 50 μm or less. When the fiber length is within the above range, the electrode catalyst layer can have increased strength and thus prevent occurrence of cracking, and as a result, the durability of the electrode catalyst layer against physical impact is improved. In addition, the number of pores formed in the electrode catalyst layer can be increased, whereby the output of the fuel cell can be increased.

The cathode electrode catalyst layer 12C preferably has a mass ratio of the conductive material 25 to the oxide catalyst 22 (mass of conductive material (C)/mass of oxide catalyst (Ox): mass ratio C/Ox) in the range of 0.05 or more and 1.0 or less. When the mass ratio Ox/C is 1.0 or less, the electron conductivity in the cathode electrode catalyst layer 12C is prevented from decreasing, and thus the power generation performance of the fuel cell is prevented from decreasing. When the mass ratio Ox/C is 0.05 or more, the distance between the oxide catalysts 22 is prevented from increasing, and thus the power generation performance of the fuel cell is prevented from decreasing.

The electrode catalyst layer preferably has a mass ratio of the conductive material 25 to the platinum catalyst 21 (mass of conductive material (C)/mass of platinum catalyst 21 (P): mass ratio C/P) within the range of 0.3 or more and 1.5 or less. When the mass ratio C/P is within the above range, the number of pores formed in the electrode catalyst layer increases, whereby the output of the fuel cell can be increased.

The electrode catalyst layer preferably has a thickness in the range of 5 μm or more and 30 μm or less, and more preferably be in the range of 10 μm or more and 20 μm or less. When the thickness of the electrode catalyst layer

is 5 $\mu$m or more, flooding is prevented from occurring, and thus the output of the fuel cell is prevented from decreasing. When the thickness of the electrode catalyst layer is 30 $\mu$m or less, the resistance of the electrode catalyst layer is prevented from increasing, and thus the output of the fuel cell is prevented from decreasing.

The electrode catalyst layer preferably has a density in the range of 1,000 mg/cm$^3$ or more and 5,000 mg/cm$^3$ or less, and more preferably be in the range of 1,500 mg/cm$^3$ or more and 4,000 mg/cm$^3$ or less. When the density of the electrode catalyst layer is 1,000 mg/cm$^3$ or more, the amount of catalyst per unit volume is prevented from decreasing, and thus the power generation performance of the fuel cell is prevented from decreasing. Further, when the density of the electrode catalyst layer is 1,000 mg/cm$^3$ or more, a distance between the polyelectrolyte 24 and the conductive material 25 is prevented from increasing, whereby the electrode catalyst layer becomes less likely to crush and as a result, the durability of the electrode catalyst layer is prevented from decreasing. When the density is 5,000 mg/cm$^3$ or less, the internal structure of the electrode catalyst layer is prevented from becoming dense, whereby water drainage and gas diffusion are prevented from decreasing, and as a result, the power generation performance at high output is prevented from decreasing. Further, the flexibility of the electrode catalyst layer is prevented from decreasing.

[Polymer Electrolyte Fuel Cell]

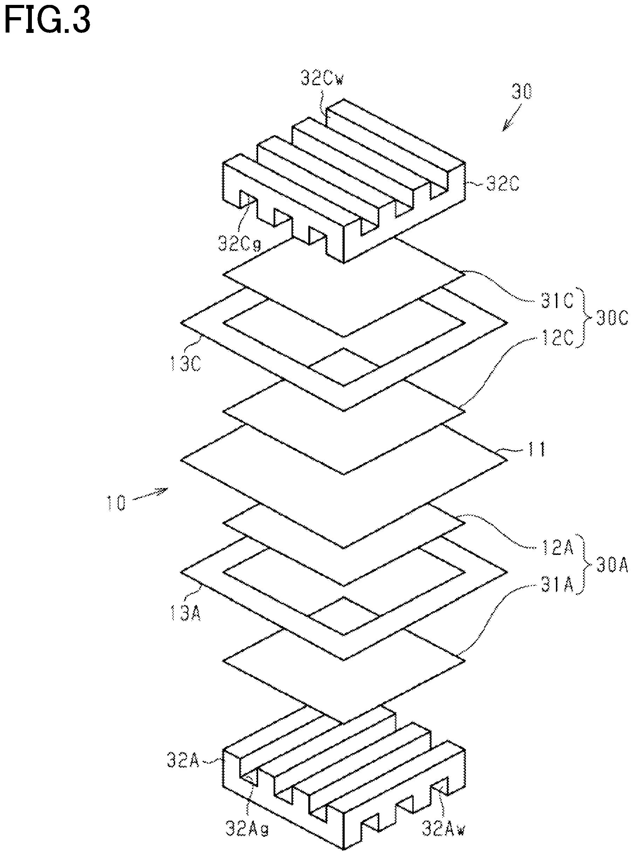

With reference to Fig. 3, a configuration of the polymer electrolyte fuel cell including the membrane electrode assembly will be described. The configuration described below is an example configuration of a polymer electrolyte fuel cell. Fig. 3 illustrates a structure of a single cell included in the polymer electrolyte fuel cell. The polymer electrolyte fuel cell may have a structure including a plurality of single cells laminated with each other.

As illustrated in Fig. 3, a polymer electrolyte fuel cell 30 includes the membrane electrode assembly 10, a pair of gas diffusion layers and a pair of separators. The pair of gas diffusion layers includes a cathode gas diffusion layer 31C and an anode gas diffusion layer 31A. The pair of separators includes a cathode separator 32C and an anode separator 32A.

The cathode gas diffusion layer 31C is in contact with the cathode electrode catalyst layer 12C. The cathode electrode catalyst layer 12C and the cathode gas diffusion layer 31C constitute an air electrode (cathode) 30C. The anode gas diffusion layer 31A is in contact with the anode electrode catalyst layer 12A. The anode electrode catalyst layer 12A and the anode gas diffusion layer 31A constitute a fuel electrode (anode) 30A.

In the polymer electrolyte membrane 11, the surface to which the cathode electrode catalyst layer 12C is bonded is a cathode surface, and the surface to which the anode electrode catalyst layer 12A is bonded is an anode surface. A portion of the cathode surface that is not covered with the cathode electrode catalyst layer 12C is an outer peripheral portion. At the outer peripheral portion, a cathode gasket 13C is located. A portion of the anode surface that is not covered with the anode electrode catalyst layer 12A is an outer peripheral portion. At the outer peripheral portion, an anode gasket 13A is located. The cathode gasket 13C and the anode gasket 13A prevent leakage of gas from the outer peripheral portion of the respective surfaces.

A multilayer composed of the membrane electrode assembly 10 and the two gas diffusion layers 31C and 31A is sandwiched between the cathode separator 32C and the anode separator 32A, in a thickness direction of the polymer electrolyte fuel cell 30. The cathode separator 32C faces the cathode gas diffusion layer 31C. The anode separator 32A faces the anode gas diffusion layer 31A.

In the cathode separator 32C, a pair of opposing surfaces facing away from each other respectively have a plurality of grooves. Of the pair of surfaces, the surface facing the cathode gas diffusion layer 31C has grooves as gas flow channels 32Cg. The other surface has grooves as cooling water flow channels 32Cw. In the anode separator 32A, a pair of opposing surfaces facing away from each other respectively has a plurality of grooves. Of the pair of surfaces, the surface facing the anode gas diffusion layer 31A has grooves as gas flow channels 32Ag. The other surface has grooves as cooling water flow channels 32Aw. The separators 32C and 32A are made of a material that is electrically conductive and has low gas permeability.

In the polymer electrolyte fuel cell 30, an oxidant gas is supplied to the air electrode 30C through the gas flow channels 32Cg in the cathode separator 32C. A fuel gas is supplied to the fuel electrode 30A through the gas flow channels 32Ag in the anode separator 32A. Thus, the polymer electrolyte fuel cell 30 generates power. The oxidant gas may be, for example, air or oxygen gas. The fuel gas may be, for example, hydrogen gas.

[Method of Producing Oxide Catalyst]

A method of producing an oxide catalyst can include a step of calcining a metal complex composed of a transition metal and a nitrogen-containing hydrocarbon in a nitrogen gas atmosphere. The method of producing an oxide catalyst may further include a step of calcining, in an ammonia gas atmosphere, powder produced by the step of calcining in a nitrogen gas atmosphere. The nitrogen-containing hydrocarbon may be, for example, porphyrin, pyridine, pyrrole, or the like.

When the oxide catalyst 22 contains Zr as a transition metal, the oxide catalyst 22 can be produced by the following method, for example.

A zirconium-porphyrin complex is calcined in an inert gas atmosphere containing an oxygen source to partially oxidize the zirconium-porphyrin complex to thereby produce $Zr_wO_xN_y$. The oxygen source may be a trace amount of oxygen gas, an oxide containing oxygen, or the like. That is, when the oxygen source is oxygen gas, a zirconium-porphyrin complex is calcined in an inert gas atmosphere containing a trace amount of oxygen gas to produce $Zr_wO_xN_y$. When the oxygen source is an oxide containing oxygen, a zirconium-porphyrin complex and an oxide containing oxygen are placed in separate vessels, and then calcined in the same furnace in an inert gas atmosphere. Accordingly, the zirconium-porphyrin complex is partially oxidized by the oxygen released from the oxide to thereby produce $Zr_wO_xN_y$.

In any of the methods, $ZrO_xN_yC_v$ can be produced by adjusting the calcination temperature and calcination time. Further, a partial oxide represented by $Zr_wO_x$ can also be produced by calcining $ZrO_2$, which is a complete oxide, in an inert gas atmosphere containing a trace amount of hydrogen.

When the oxide catalyst 22 contains Ti as a transition metal and the oxide catalyst 22 has a fibrous shape, the oxide catalyst 22 can be produced by the following method, for example.

In production of the oxide catalyst 22, first, a fibrous rutile-type titanium oxide ($Ti_wO_x$), which is a precursor of the oxide catalyst 22, is produced. A method of producing a rutile-type titanium oxide includes: a step of mixing a titanium oxide with two or more types of salts to produce a mixture; and a step of heating the mixture at a temperature higher than a eutectic point of the salts contained in the mixture to obtain fibrous titanium oxide. In the salts contained in the mixture, it is preferred that both sodium (Na) atoms and phosphorus atoms are contained in any of the salts to be mixed. The mixture may contain, for example, both sodium chloride (NaCl) and sodium hexametaphosphate ($(NaPO_3)_6$).

A method of producing an oxide catalyst using a fibrous rutile-type titanium oxide includes: a step of producing a dispersion; a step of heating the dispersion; a step of drying the dispersion to produce powder; and a step of pyrolyzing the produced powder to obtain an oxide catalyst. In the step of producing a dispersion, fibrous rutile-type $Ti_wO_x$, of titanium oxysulfate ($TiOSO_4$) powder, and urea ($(NH_2)_2CO$) are mixed to produce a dispersion. In this case, $Ti_wO_xN_y$ is obtained as an oxide catalyst in the step of obtaining an oxide catalyst. Further, in the step of producing a dispersion, the dispersion may further contain phosphoric acid ($H_3PO_4$). In this case, $Ti_wO_xN_yP_z$ is obtained as an oxide catalyst in the step of obtaining an oxide catalyst.

The ratio of the number of phosphorus atoms to the number of titanium atoms used in production of the oxide catalyst 22 is a phosphorus/titanium ratio ($R_p$). That is, the ratio of the number of phosphorus atoms derived from phosphoric acid to the number of titanium atoms derived from titanium oxysulfate is the phosphorus/titanium ratio ($R_p$). The phosphorus/titanium ratio ($R_p$) is preferably 0.2 or more and 0.5 or less. Accordingly, $Ti_wO_xN_yP_z$ catalyst with enhanced ORR (Oxygen Reduction Reaction) activity can be obtained.

In the step of producing a dispersion, titanium oxysulfate (IV) powder and phosphoric acid may be mixed for several hours. In the step of heating the dispersion, the dispersion may be heated while being stirred. In the step of pyrolyzing the produced powder (pyrolysis step), the powder can be pyrolyzed in an environment in which nitrogen gas is supplied. In the pyrolysis step, the temperature for pyrolyzing the powder is preferably set to a temperature higher than 973K (700°C), and for example, it can be set to 1,123K (850°C). In the pyrolysis step, the period for pyrolyzing the powder can be set to several hours, for example.

After the pyrolysis step, a post-annealing step may be performed. In the post-annealing step, the $Ti_wO_xN_yP_z$ catalyst obtained by the pyrolysis step is heated in an environment in which ammonia ($NH_3$) gas is supplied. In the post-annealing step, the temperature for heating the $Ti_wO_xN_yP_z$ catalyst may be set to, for example, 923K (650°C).

[Method of Producing Electrode Catalyst Layer]

In production of the electrode catalyst layer, first, a catalyst layer slurry is prepared. Then, the catalyst layer slurry is applied to the substrate, the polymer electrolyte membrane 11 or the gas diffusion layer, and the applied catalyst layer slurry is dried. Thus, the electrode catalyst layer can be produced. The following description will be given of an example in which the first portion and the second portion of the electrode catalyst layer are formed of different catalyst layer slurries.

The first catalyst layer slurry contains the platinum catalyst 21, the carrier 23, the polyelectrolyte 24, the conductive material 25 and a solvent. The second catalyst layer slurry contains the oxide catalyst 22, the polyelectrolyte 24, the conductive material 25 and a solvent.

The solvent contained in the first catalyst layer slurry and the second catalyst layer slurry is preferably a solvent that is able to disperse or dissolve the polyelectrolyte 24. Examples of the solvent include, water, alcohols, ketones, ethers, amines, esters, glycols, glycol ethers, acetic acid, propionic acid, dimethylformamide, dimethylacetamide, and N-methylpyrrolidone.

Examples of the alcohols include methanol, ethanol, 1-propanol, 2-propanol, 1-butanol, 2-butanol, isobutyl alcohol, and tert-butyl alcohol. Examples of the ketones include acetone, methyl ethyl ketone, methyl propyl ketone, methyl butyl ketone, methyl isobutyl ketone, methyl amyl ketone, pentanone, heptanone, cyclohexanone, methylcyclohexanone, acetonylacetone, diethyl ketone, dipropyl ketone, diisobutyl ketone, and diacetone alcohol. Examples of the ethers include tetrahydrofuran, tetrahydropyran, dioxane, diethylene glycol dimethyl ether, anisole, methoxytoluene, diethyl ether, dipropyl ether, and dibutyl ether. Examples of the amines include isopropylamine, butylamine, isobutylamine, cyclohexylamine, diethylamine, and aniline. Examples of the esters include propyl formate, isobutyl formate, amyl formate, methyl acetate, ethyl acetate, propyl acetate, butyl acetate, isobutyl acetate, pentyl acetate, isopentyl acetate, methyl propionate, ethyl propionate, and butyl propionate. Examples of the glycols include ethylene glycol, diethylene glycol, and propylene glycol. Examples of the glycol ethers include ethylene glycol monomethyl ether, ethylene glycol dimethyl ether, ethylene glycol diethylether, 1-methoxy-2-propanol, and 1-ethoxy-2-propanol.

The catalyst layer slurry preferably has a solid content concentration in the range of 5 mass% or more and 30 mass% or less, and more preferably in the range of 8 mass% or more and 20 mass% or less. When the solid content concentration is 5 mass% or more, the viscosity of the catalyst layer slurry is prevented from decreasing, whereby variation in coating amount can be prevented. When the solid content concentration is 30 mass% or less, the viscosity of the catalyst layer slurry is prevented from increasing, whereby deterioration of the appearance of the electrode catalyst layer formed by coating is prevented.

The catalyst layer slurry may be applied by, for example, doctor blading, die coating, dipping, screen printing, laminator roll coating, or spraying.

The catalyst layer slurry may be dried by, for example, hot air drying, or IR (Infrared rays) drying. The drying temperature is preferably in the range of 40°C or more and 200°C or less, and more preferably in the range of 40°C or more and 120°C or less. When the drying temperature is 40°C or more, the solvent is prevented from not volatilizing. When the drying temperature is 200°C or less, ignition of the catalyst layer slurry can be prevented.

The drying time of the catalyst layer slurry is preferably in the range of 0.5 minutes or more and 1 hour or less, and more preferably in the range of 1 minute or more and 30 minutes or less. When the drying time is 0.5 minutes or more, the solvent can be prevented from remaining. When the drying time is 1 hour or less, the polymer electrolyte membrane 11 is prevented from being dried, whereby deformation of the polymer electrolyte membrane 11 is prevented.

[Method of Producing Membrane Electrode Assembly]

In production of the membrane electrode assembly 10, after the electrode catalyst layer is formed on the transfer substrate or the gas diffusion layer, the electrode catalyst layer may be bonded to the polymer electrolyte membrane 11 by thermocompression bonding. Alternatively, the electrode catalyst layer may be formed directly on the polymer electrolyte membrane 11. When the electrode catalyst layer is formed directly on the polymer electrolyte membrane 11, adhesion between the polymer electrolyte membrane 11 and the electrode catalyst layer is increased and crushing of the electrode catalyst layer due to thermocompression bonding does not occur. From these viewpoints, forming the electrode catalyst layer directly on the polymer electrolyte membrane 11 is more preferred than bonding the electrode catalyst layer to the polymer electrolyte membrane 11.

[Examples]

With reference to Table 1, examples will be described.

[Example 1]

50 mg of a particulate $Ti_wO_xN_yP_z$ catalyst and 5 mg of carbon fibers (VGCF-H, manufactured by Showa Denko K.K) were placed in a vessel. After 50 mg of water was added into the vessel and mixed, 50 mg of 1-propanol and 30 mg of polyelectrolyte (Nafion (registered trademark) dispersion, manufactured by FUJIFILM Wako Pure Chemical Corporation) were added into the vessel and stirred. Thus, a second catalyst layer slurry was obtained.

20 mg of carbon-supported platinum (TEC10E50E, manufactured by Tanaka Kikinzoku Kogyo K.K.) was placed in a vessel. After 150 mg of water was added into the vessel and mixed, 150 mg of 1-propanol and 10 mg of polyelectrolyte (same as above) were added into the vessel and stirred. Thus, a first catalyst layer slurry was obtained. In the carbon-supported platinum used in this example, 10 g of carbon was contained in 20 g of carbon-supported platinum.

The second catalyst layer slurry was applied to one side of a polymer electrolyte membrane (Nafion 212, manufactured by DuPont), and dried in a furnace at 80°C to thereby obtain an electrolyte membrane with catalyst layer. The second catalyst layer slurry was applied by die coating. The thickness of the catalyst layer was set so that the amount of catalyst supported in the catalyst layer became 1.0 mg/cm$^2$.

The first catalyst layer slurry was applied to one side of an anode gas diffusion layer and a cathode gas diffusion layer (SIGRACET (registered trademark) 35BC, manufactured by SGL), and dried in a furnace at 80°C to thereby obtain two gas diffusion layers with catalyst layer. The first catalyst layer slurry was applied by die coating. The thickness of the catalyst layer was set so that the amount of catalyst supported in the catalyst layer became 0.1 mg/cm$^2$. The electrolyte membrane with catalyst layer was sandwiched between the catalyst layers of the two gas diffusion layers with catalyst layer in the thickness direction of the electrolyte membrane with catalyst layer. The cathode gas diffusion layer was brought into contact with the catalyst layer of the electrolyte membrane with catalyst layer. The two gas diffusion layers with catalyst layer and the electrolyte membrane with catalyst layer were bonded to each other by thermocompression bonding to thereby obtain a membrane electrode assembly according to Example 1.

[Example 2]

Example 1 was modified as follows. The second catalyst layer slurry was applied to one side of a cathode gas diffusion layer. The first catalyst layer slurry was applied to both sides of a polymer electrolyte membrane. The electrolyte membrane with catalyst layer was sandwiched between the two gas diffusion layers in the thickness direction of the electrolyte membrane with catalyst layer such that an anode catalyst layer was in contact with the anode gas diffusion layer having no catalyst layer and a cathode catalyst layer was in contact with a catalyst layer of the cathode gas diffusion layer with catalyst layer. Then, the two gas diffusion layers and the electrolyte membrane with catalyst layer were bonded to each other by thermocompression bonding. A membrane electrode assembly of Example 2 was obtained in the same manner as in Example 1 except for the above.

[Example 3]

A membrane electrode assembly of Example 3 was obtained in the same manner as in Example 2 except that the particulate $Ti_wO_xN_yP_z$ catalyst in Example 2 was changed to a fibrous $Ti_wO_xN_yP_z$ catalyst.

[Example 4]

A membrane electrode assembly of Example 4 was obtained in the same manner as in Example 2 except that the particulate $Ti_wO_xN_yP_z$ catalyst in Example 2 was changed to a particulate $Zr_wO_xN_yC_v$ catalyst.

[Comparative Example 1]

100 mg of a particulate $Ti_wO_xN_yP_z$ catalyst, 1 mg of carbon fibers (same as above) and 10 mg of carbon-supported platinum (same as above) were placed into a vessel, and 200 mg of water was added into the vessel and mixed. Then, 200 mg of 1-propanol and 40 mg of polyelectrolyte (same as above) were added and stirred. Thus, a third catalyst layer slurry was obtained. In the carbon-supported platinum used in this comparative example, 10 g of carbon was contained in 20 g of carbon-supported platinum.
The third catalyst layer slurry was applied to one side of a polymer electrolyte membrane, and dried in a furnace at 80°C to thereby obtain an electrolyte membrane with catalyst layer. The third catalyst layer slurry was applied by die coating. The thickness of the catalyst layer was set so that the amount of supported catalyst became 1.1 mg/cm$^2$.
The first catalyst layer slurry of Example 1 was applied to a surface of the electrolyte membrane with catalyst layer on a side opposite to that on which the catalyst layer was formed, and dried in a furnace at 80°C to thereby obtain an electrolyte membrane with catalyst layer. The first catalyst layer slurry was applied by die coating. The thickness of the catalyst layer was set so that the amount of catalyst supported became 0.1 mg/cm$^2$. With the electrolyte membrane with catalyst layer being sandwiched between the two gas diffusion layers in the thickness direction of the electrolyte membrane with catalyst layer, the gas diffusion layers and the electrolyte membrane with catalyst layer were bonded to each other by thermocompression bonding. Thus, a membrane electrode assembly of Comparative Example 1 was obtained.

[Comparative Example 2]

The first catalyst layer slurry of Example 1 was applied to both sides of a polymer electrolyte membrane, and dried in a furnace at 80°C to thereby obtain an electrolyte membrane with catalyst layer. The first catalyst layer slurry was applied by die coating. The thickness of the catalyst layer was set so that the amount of supported catalyst each became 0.1 mg/cm$^2$. With the electrolyte membrane with catalyst layer being sandwiched between the two gas diffusion layers in the thickness direction of the electrolyte membrane with catalyst layer, the gas diffusion layers and the electrolyte membrane with catalyst layer were bonded to each other by thermocompression bonding. Thus, a membrane electrode assembly of Comparative Example 2 was obtained.

[Evaluation Method]

[Power Generation Performance]

Using a commercially available JARI standard cell, the power generation performance was evaluated for the fuel cell including the membrane electrode assembly of each example and the fuel cell including the membrane electrode assembly of each comparative example. The evaluation of power generation performance was performed according to the protocol (Cell Evaluation and Analysis Protocol, December 2012) established by the New Energy and Industrial Technology Development Organization. The cell temperature was set to 80°C. Further, hydrogen with a relative humidity of 88%RH was supplied to the anode, and air with a relative humidity of 42%RH was supplied to the cathode.

[Durability]

Using a commercially available JARI standard cell, the durability was evaluated by a humidity cycle test for the fuel cell including the membrane electrode assembly of each example and the fuel cell including the membrane electrode assembly of each comparative example. The evaluation of durability was performed according to the protocol (same as above) established by New Energy and Industrial Technology Development Organization. The cell temperature was set to 80°C, and nitrogen was supplied to the anode and the cathode. Supply of nitrogen gas with a relative humidity of 150%RH was maintained for 2 minutes and then supply of nitrogen gas with a relative humidity of 0%RH was maintained for 2 minutes. The supply of nitrogen gas with a relative humidity of 150%RH and the supply of nitrogen gas with a relative humidity of 0%RH were alternately repeated.

[Evaluation Results]

Table 1 shows the results of evaluating the power generation performance and durability. In Table 1, "excellent" indicates that the power generation performance was 0.6 A/cm$^2$ or more, "good" indicates 0.2 A/cm$^2$ or more and less than 0.6 A/cm$^2$, and "poor" indicates less than 0.2 A/cm$^2$. It should be noted that even when the power generation performance is rated as "poor," the membrane electrode assembly has no practical problem as a membrane electrode assembly of a fuel cell. Further, in Table 1, "good" indicates that the hydrogen cross over current at 10 times or less the initial value was maintained for 100,000 cycles or more, and "poor" indicates that it was maintained for less than 100,000 cycles. It should be noted that even when the durability is rated as "poor," the membrane electrode assembly has no practical problem as a membrane electrode assembly of a fuel cell.

[Table 1]

|  | Power Generation Performance | Durability |
|---|---|---|
| Example 1 | Good | Poor |
| Example 2 | Excellent | Poor |
| Example 3 | Excellent | Good |
| Example 4 | Excellent | Poor |
| Comparative Example 1 | Poor | Poor |
| Comparative Example 2 | Poor | Poor |

As seen from Table 1, the evaluation results of the membrane electrode assemblies of Example 1 to 4 and the membrane electrode assemblies of Comparative Examples 1 and 2 show that the power generation performance is enhanced when the electrode catalyst layer of the membrane electrode assembly has a two-layer structure. The membrane electrode assembly of Comparative Example 1 is considered to have low power generation performance since the oxide catalyst adsorbs the polyelectrolyte, which causes the polyelectrolyte to be unevenly distributed in the electrode catalyst layer. The membrane electrode assembly of Comparative Example 2 is considered to have low power generation performance since only the electrode catalyst layer containing the platinum catalyst is provided.

On the other hand, the membrane electrode assemblies of Examples 1 to 4 are considered to have high power generation performance since the electrode catalyst layer includes a layer containing the oxide catalyst and the platinum catalyst, whereby the composition and structure suitable for each catalyst are provided.

In particular, the membrane electrode assemblies of Examples 2 to 4, in which a layer containing the platinum catalyst having high catalytic activity is formed in a portion of the cathode electrode catalyst layer in contact with the polymer electrolyte membrane, are considered to have improved power generation performance since the protons migrating from the polymer electrolyte membrane toward the cathode electrode catalyst layer can be used for chemical reactions with high efficiency. Further, in Example 3, the fuel cell is considered to have improved durability since the electrode catalyst layer has increased strength due to the electrode catalyst layer containing the fibrous oxide catalyst.

As described above, according to an embodiment of the electrode catalyst layer, the membrane electrode assembly and the polymer electrolyte fuel cell, the following effects can be achieved.

(1) Since the platinum catalyst 21 having high catalytic activity is densely distributed in regions close to the polymer electrolyte membrane 11, redox reactions in the electrode catalyst layer are more likely to occur. Therefore, it is possible to enhance the cell performance of the polymer electrolyte fuel cell including the membrane electrode assembly 10 having the electrode catalyst layer.
(2) Since the oxide catalyst 22 having low catalytic activity is densely distributed in regions further from the polymer electrolyte membrane 11, the platinum catalyst 21 having high catalytic activity can be densely distributed in the vicinity of the polymer electrolyte membrane 11. Therefore, it is possible to enhance the cell performance of the polymer electrolyte fuel cell including the membrane electrode assembly 10 having the electrode catalyst layer.
(3) Since the first portion 12C1 containing the platinum catalyst 21 and the second portion 12C2 containing the oxide catalyst 22 can be separately formed, catalyst layer slurries suitable for each of the platinum catalyst 21 and the oxide catalyst 22 can be prepared when forming the electrode catalyst layer using a catalyst layer slurry.
(4) The oxide catalyst 22 having catalytic activity for redox reactions can be obtained.
(5) The oxide catalyst 22 having catalytic activity can increase the mechanical strength of the electrode catalyst layer and thus suppress occurrence of cracking in the electrode catalyst layer.

The embodiment described above can be modified and implemented as follows.

[Oxide Catalyst]

- The oxide catalyst 22 may be fibrous or particulate. Even when the oxide catalyst 22 is particulate, effects similar to those obtained with the above (1) can be achieved as long as the density of the platinum catalyst 21 in the electrode catalyst layer is highest at the first surface.

[Electrode Catalyst Layer]

- The electrode catalyst layer may not necessarily be composed of the first portion that contains the platinum catalyst 21 but does not contain the oxide catalyst 22 and the second portion that contains the oxide catalyst 22 but does not contain the platinum catalyst 21. For example, the electrode catalyst layer may contain both the platinum catalyst 21 and the oxide catalyst 22 throughout the thickness direction.

In this case, the density of the platinum catalyst 21 may be highest in a region including the first surface of the electrode catalyst layer, and the density of the oxide catalyst 22 may be highest in a region including the second surface. Therefore, for example, the density of the platinum catalyst 21 may decrease from the first surface toward the second surface, or the density of the oxide catalyst 22 may decrease from the second surface toward the first surface. Alternatively, the density of the platinum catalyst 21 may be a first density in a region including the first surface, and a second density smaller than the first density in other regions. Alternatively, the density of the oxide catalyst 22 may be a third density in a region including the second surface, and a fourth density smaller than the third density in other regions.

That is, in the electrode catalyst layer, the density of the platinum catalyst 21 and the density of the oxide catalyst 22 may satisfy the followings. The density of the platinum catalyst 21 may be highest in a region including the first surface in the first portion, and a maximum value of the density of the platinum catalyst 21 in the second portion may be smaller than a minimum value of the density of the platinum catalyst 21 in the first portion. The density of the oxide catalyst 22 may be highest in a region including the second surface in the second portion, and a maximum value of the density of the oxide catalyst 22 in the first portion may be smaller than a minimum value of the density of the oxide catalyst 22 in the second portion.

Therefore, the density of the platinum catalyst 21 in the thickness direction of the electrode catalyst layer may satisfy any one of the first to fourth aspects described below. In the first aspect, the density of the platinum catalyst 21 may be constant in the thickness direction of the first portion, and the density of the platinum catalyst 21 in the second portion may be constant in the thickness direction of the second portion and may be smaller than the density of the platinum catalyst 21 in the first portion. In the second aspect, the density of the platinum catalyst 21 may be constant in the thickness direction of the first portion, the density of the platinum catalyst 21 in the second portion may have a gradient monotonically decreasing from a surface of the second portion in contact with the first portion to the second surface, and a maximum value of the density of the platinum catalyst 21 in the second portion may be smaller than the density of the platinum catalyst 21 in the first portion.

In the third aspect, the density of the platinum catalyst 21 in the first portion may have a gradient monotonically decreasing from the first surface to a surface in contact with the second portion, and the density of the platinum catalyst 21 in the second portion may be constant in the second portion and may be smaller than a minimum value of the density of the platinum catalyst 21 in the first portion. In the fourth aspect, the density of the platinum catalyst 21 in the first portion may have a gradient monotonically decreasing from the first surface to a surface in contact with the second portion, the density of the platinum catalyst 21 in the second portion may have a gradient monotonically decreasing from a surface of the second portion in contact with the first portion to the second surface, and a maximum value of the density of the platinum catalyst 21 in the second portion may be smaller than a minimum value of the density of the platinum catalyst 21 in the first portion.

On the other hand, the density of the oxide catalyst 22 in the thickness direction of the electrode catalyst layer may satisfy any one of the first to fourth aspects described below. In the first aspect, the density of the oxide catalyst 22 may be constant in the thickness direction of the second portion, and the density of the oxide catalyst 22 in the second portion may be constant in the thickness direction of the first portion and may be smaller than the density of the oxide catalyst 22 in the second portion. In the second aspect, the density of the oxide catalyst 22 may be constant in the thickness direction of the second portion, the density of the oxide catalyst 22 in the first portion may have a gradient monotonically decreasing from a surface of the first portion in contact with the second portion to the first surface, and a maximum value of the density of the oxide catalyst 22 in the first portion may be smaller than the density of the oxide catalyst 22 in the second portion.

In the third aspect, the density of the oxide catalyst 22 in the second portion may have a gradient monotonically decreasing from the second surface to a surface in contact with the first portion, and the density of the oxide catalyst 22 in the first portion may be constant in the first portion and may be smaller than a minimum value of the density of the oxide catalyst 22 in the second portion. In the fourth aspect, the density of the oxide catalyst 22 in the second portion may have a gradient monotonically decreasing from the second surface to a surface in contact with the first portion, the density of the oxide catalyst 22 in the first portion may have a gradient monotonically decreasing from a surface of the first portion in contact with the second portion to the first surface, and a maximum value of the density of the oxide catalyst 22 in the first portion may be smaller than a minimum value of the density of the oxide catalyst 22 in the second portion.

The first to fourth aspects of the density of the platinum catalyst 21 and the first to fourth aspects of the density of the oxide catalyst 22 can be arbitrarily combined.

That is, the electrode catalyst layer may have a portion in which the density of the platinum catalyst 21 decreases from the first surface toward the second surface, but the density of the platinum catalyst 21 in the electrode catalyst layer may be configured so as not to increase from the second surface toward the first surface. Further, the electrode catalyst layer may have a portion in which the density of the oxide catalyst 22 decreases from the second surface toward the first surface, but the density of the oxide catalyst 22 in the electrode catalyst layer may be configured so as not to increase from the first surface toward the second surface.

Even in the above cases, effects similar to those obtained with the above (1) can be achieved as long as the density of the platinum catalyst 21 is highest at the first surface of the electrode catalyst layer. Further, effects similar to those obtained with the above (2) can be achieved as long as the density of the oxide catalyst 22 is highest at the second surface of the electrode catalyst layer.

Furthermore, in order to produce an electrode catalyst layer in which the concentration of each catalyst gradually changes in the thickness direction of the electrode catalyst layer, for example, a plurality of types of catalyst layer slurries having different catalyst concentrations may be prepared.

- The density of the platinum catalyst 21 in the thickness direction of the electrode catalyst layer may be inverted between the first surface and the second surface, and the density of the oxide catalyst 22 in the thickness direction of the electrode catalyst layer may be inverted between the first surface and the second surface. That is, in the first to fourth aspects of the density of the platinum catalyst 21 in the above embodiments and modified examples, the first surface may be changed to the second surface, and, while changing the first surface to the second surface, the first portion may be changed to the second portion accordingly and the second portion may be changed to the first portion accordingly. Further, in the first to fourth aspects of the density of the oxide catalyst 22, the first surface may be changed to the second surface, and, while changing the first surface to the second surface, the first portion may be changed to the second portion accordingly and the second portion may be changed to the first portion accordingly.

Even in these cases, since the density of the platinum catalyst 21 and the density of the oxide catalyst 22 have maximum values at different positions in the thickness direction of the electrode catalyst layer, the activity of the oxide catalyst 22 and the activity of the oxide catalyst 22 can be easily obtained.

- The electrode catalyst layer may have a distribution of the density of the platinum catalyst 21 such that the density of the platinum catalyst 21 is highest in a region of the electrode catalyst layer including the first surface, while the density of the oxide catalyst 22 is substantially constant in the thickness direction of the electrode catalyst layer. That is, the density of the platinum catalyst 21 may satisfy any one of the first to fourth aspects described above. Even in this case, effects similar to those obtained with the above (1) can be achieved.

[Reference Signs List]

10 ... Membrane electrode assembly
11 ... Polymer electrolyte membrane
12A ... Anode electrode catalyst layer
12A1, 12C1 ... First portion
12C ... Cathode electrode catalyst layer
12A2, 12C2 ... Second portion
30 ... Polymer electrolyte fuel cell

**Claims**

1. An electrode catalyst layer having a first surface configured to be in contact with a polymer electrolyte membrane in a membrane electrode assembly, and a second surface facing away from the first surface, the electrode catalyst layer comprising:

   a first portion having a layer shape including the first surface; and
   a second portion having a layer shape including the second surface, the second portion being laminated on the first portion, wherein
   the electrode catalyst layer contains a first catalyst containing platinum and a second catalyst containing transition metal oxide,
   the first catalyst has catalytic activity higher than that of the second catalyst,
   a density of the first catalyst in the electrode catalyst layer is highest in a region including the first surface in the first portion, and
   a maximum value of the density of the first catalyst in the second portion is smaller than a minimum value of the density of the first catalyst in the first portion.

2. The electrode catalyst layer according to claim 1, wherein

   a density of the second catalyst in the electrode catalyst layer is highest in a region including the second surface in the second portion, and
   a maximum value of the density of the second catalyst in the first portion is smaller than a minimum value of the second catalyst in the second portion.

3. The electrode catalyst layer according to claim 1 or 2, wherein

   the first portion contains the first catalyst but does not contain the second catalyst, and
   the second portion contains the second catalyst but does not contain the first catalyst.

4. The electrode catalyst layer according to any one of claims 1 to 3, wherein
   a transition metal in the transition metal oxide is at least one selected from the group consisting of titanium, tantalum, niobium, iron and zirconium.

5. The electrode catalyst layer according to any one of claims 1 to 4, wherein
the second catalyst has a fibrous shape.

6. An electrode catalyst layer having a first surface configured to be in contact with a polymer electrolyte membrane in a membrane electrode assembly, and a second surface facing away from the first surface, the electrode catalyst layer comprising:

a first portion having a layer shape including the first surface; and
a second portion having a layer shape including the second surface, the second portion being laminated on the first portion, wherein
the electrode catalyst layer contains a first catalyst containing platinum and a second catalyst containing transition metal oxide,
the first catalyst has catalytic activity higher than that of the second catalyst,
a density of the first catalyst in the electrode catalyst layer is highest in a region including the second surface in the second portion, and
a maximum value of the density of the first catalyst in the first portion is smaller than a minimum value of the density of the first catalyst in the second portion.

7. A membrane electrode assembly comprising:

the electrode catalyst layer according to any one of claims 1 to 6; and
a polymer electrolyte membrane, wherein
the first surface of the electrode catalyst layer is bonded to the polymer electrolyte membrane.

8. A polymer electrolyte fuel cell comprising the membrane electrode assembly according to claim 7.

# FIG.1

# FIG.2

# FIG.3

## INTERNATIONAL SEARCH REPORT

| | International application No. |
|---|---|
| | **PCT/JP2022/006743** |

**A. CLASSIFICATION OF SUBJECT MATTER**

*H01M 4/86*(2006.01)i; *H01M 4/90*(2006.01)i; *H01M 4/92*(2006.01)i; *H01M 8/10*(2016.01)i; *H01M 8/1004*(2016.01)i; *B01J 23/42*(2006.01)i; *B01J 27/24*(2006.01)i
FI:    H01M8/1004; H01M8/10 101; H01M4/92; H01M4/90 X; H01M4/86 M; B01J27/24 M; B01J23/42 M

According to International Patent Classification (IPC) or to both national classification and IPC

**B. FIELDS SEARCHED**

Minimum documentation searched (classification system followed by classification symbols)

H01M4/86; H01M4/90; H01M4/92; H01M8/10; H01M8/1004; B01J23/42; B01J27/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-123728 A (MATSUSHITA ELECTRIC INDUSTRIAL CO., LTD.) 29 May 2008 (2008-05-29) | 1-4, 6-8 |
| | claims 1, 4, paragraphs [0050]-[0058], [0067] | |
| Y | | 5 |
| X | JP 2005-353408 A (SHARP CORP.) 22 December 2005 (2005-12-22) | 1-4, 7-8 |
| | claims 1, 4 | |
| Y | | 5 |
| Y | WO 2021/025157 A1 (TOPPAN PRINTING CO., LTD.) 11 February 2021 (2021-02-11) | 5 |
| | claim 1, paragraph [0023] | |
| A | JP 2007-311354 A (SAMSUNG SDI CO., LTD.) 29 November 2007 (2007-11-29) | 1-8 |
| | entire text, all drawings | |
| A | WO 2020/179583 A1 (PANASONIC INTELLECTUAL PROPERTY MANAGEMENT CO., LTD.) 10 September 2020 (2020-09-10) | 1-8 |
| | entire text, all drawings | |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 March 2022** | **12 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/006743**

| Patent document cited in search report | | | Publication date (day/month/year) | Patent family member(s) | | | Publication date (day/month/year) |
|---|---|---|---|---|---|---|---|
| JP | 2008-123728 | A | 29 May 2008 | (Family: none) | | | |
| JP | 2005-353408 | A | 22 December 2005 | (Family: none) | | | |
| WO | 2021/025157 | A1 | 11 February 2021 | JP | 2021-27048 | A | |
| JP | 2007-311354 | A | 29 November 2007 | US | 2007/0269699 | A1 | |
| | | | | entire text, all drawings | | | |
| | | | | KR | 10-0738062 | B1 | |
| | | | | CN | 101222049 | A | |
| WO | 2020/179583 | A1 | 10 September 2020 | JP | 2020-145044 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016219179 A

- JP 2008270176 A